# EUROPEAN PATENT APPLICATION

(11) **EP 4 671 327 A1**
(43) Date of publication of application: **31.12.2025**
(21) Application number: 24760059.6
(22) Date of filing: 30.01.2024
(51) Int. Cl.: C08L 83/04, C08G 77/06

(54) **ORGANOPOLYSILOXANE EMULSION COMPOSITION AND PRODUCTION METHOD THEREFOR**

(30) Priority: 24.02.2023 JP 2023027001
(71) Applicant: SHIN-ETSU CHEMICAL CO., LTD., Tokyo 1000005 (JP)
(72) Inventor: TAWATA, Hanako, Annaka-shi, Gunma 379-0224 (JP)
(74) Representative: Schicker, Silvia
(86) International application number: PCT/JP2024/002849
(87) International publication number: WO 2024/176752

(57) **Abstract**

The present invention is an organopolysiloxane emulsion composition including: (A) 100 parts by mass of organopolysiloxane being a condensation reaction product of organopolysiloxane represented by the following general formula (1) HO(R¹₂SiO)ₙH and having silanol groups at both molecular chain ends; (B) 10 to 50 parts by mass of a nonionic surfactant having an HLB of 12 to 18; (C) 10 to 60 parts by mass of an anionic surfactant; and (D) 20 to 1,000 parts by mass of water. This can provide: an organopolysiloxane emulsion composition containing an organopolysiloxane with a viscosity of 30,000 mPa·s or higher at 25°C, containing reduced contents of octamethylcyclotetrasiloxane, decamethylcyclopentasiloxane, and dodecamethylcyclohexasiloxane, and being fine and transparent with an average particle diameter of 100 nm or less of the emulsion; and a method for manufacturing the same.

## Description

### TECHNICAL FIELD

The present invention relates to an oil-in-water organopolysiloxane emulsion composition for use in products, such as a cosmetic, a personal care composition, a home care compositions, and a releasing agent, and a method for manufacturing the same.

### BACKGROUND ART

In general, emulsions with a particle diameter of several hundred nm or more have a cloudy appearance, but as the particle diameter becomes smaller, visible light scattering becomes less likely to occur, therefore when the particle diameter is less than about 200 nm, the emulsion becomes blue-white color to transparent, and when the particle diameter is less than about 100 nm, the emulsion becomes highly transparent. In the present specification, the term "microemulsion" refers to a transparent emulsion having an average particle diameter of 100 nm or less. Microemulsions have the advantages of good stability over time and not affecting the transparency of the appearance of products to which they are blended, and various methods for producing them have been investigated.

For example, Patent Document 1 discloses an amino-modified silicone microemulsion, but the amino-modified silicone may have limited uses because the stability of the emulsion may decrease when used in combination with an anionic surfactant, and the amino-modified silicone may yellow, affecting the appearance of the product, etc. However, dimethyl silicone is less hydrophilic than amino-modified silicone, making it difficult to prepare a microemulsion.

Patent Document 2 discloses a microemulsion of short-chain linear methylsiloxane. However, there are many requests for emulsions of silicone with a viscosity of 1,000 mPa·s or higher at 25°C for the purpose of blending them in products, such as cosmetics, personal care compositions, home care compositions, and releasing agents, and emulsions does not meet the needs. Even if silicone with high-viscosity is directly emulsified, the particle diameter of the obtained emulsion particle is limited to a few hundred nanometers, making it difficult to prepare a microemulsion. Therefore, since low-viscosity silicone is relatively easy to reduce in particle size, a method for manufacturing a microemulsion by emulsion-polymerization has been investigated.

Patent Document 3 discloses a method for manufacturing a microemulsion by emulsion-polymerization using cyclic siloxane. Meanwhile, in recent years, there has been a demand for products with reduced contents of octamethylcyclotetrasiloxane, decamethylcyclopentasiloxane, and dodecamethylcyclohexasiloxane, as substances of environmental concern. However, it is known that the method disclosed in Patent Document 3 results in large contents of octamethylcyclotetrasiloxane, decamethylcyclopentasiloxane, and dodecamethylcyclohexasiloxane in the product, and it is necessary to reduce these contents.

Patent Document 4 discloses a method for producing an oil-in-water microemulsion containing a polysiloxane and a non-volatile inert fluid. Example 1 describes a method for polymerizing polysiloxane in the presence of dodecamethylcyclopentasiloxane, an organic inert fluid, and other components, volatilizing volatile cyclic siloxanes by heating in a vacuum, and then emulsifying the mixture to produce a microemulsion. However, in all Examples, including Example 1, the viscosity of the polysiloxane is low at several tens of mPa·s, and the mixture contains a non-volatile inert fluid, so that the applications may be limited.

### CITATION LIST

### PATENT LITERATURE

Patent Document 1: JP2020-518652A
Patent Document 2: JP4644328B2
Patent Document 3: JP3090281B2
Patent Document 4: JP5642064B2

### SUMMARY OF INVENTION

### TECHNICAL PROBLEM

The present invention was made in view of the above circumstances, and has for its object to provide: an organopolysiloxane emulsion composition containing an organopolysiloxane with a viscosity of 30,000 mPa·s or higher at 25°C, containing reduced contents of octamethylcyclotetrasiloxane, decamethylcyclopentasiloxane, and dodecamethylcyclohexasiloxane, and being fine and transparent with an average particle diameter of 100 nm or less of the emulsion; and a method for manufacturing the same.

### SOLUTION TO PROBLEM

To achieve the object above, the present invention provides an organopolysiloxane emulsion composition having an average particle diameter of 100 nm or less and comprising:
(A) 100 parts by mass of organopolysiloxane having a viscosity at 25°C of 30,000 mPa·s or more, containing octamethylcyclotetrasiloxane, decamethylcyclopentasiloxane, and dodecamethylcyclohexasiloxane, each in an amount of 10,000 ppm or less, and being a condensation reaction product of organopolysiloxane represented by the following general formula (1) and having silanol groups at both molecular chain ends,

   HO(R¹₂SiO)ₙH (1)

   wherein R¹ independently represents a hydrogen atom or a substituted or unsubstituted monovalent hydrocarbon group having 1 to 20 carbon atoms, and "n" represents a number that makes a kinematic viscosity at 25°C of the organopolysiloxane 10 mm²/s or more and less than 200 mm²/s;
(B) 10 to 50 parts by mass of a nonionic surfactant having an HLB of 12 to 18;
(C) 10 to 60 parts by mass of an anionic surfactant; and
(D) 20 to 1,000 parts by mass of water.

Such a composition can provide a transparent organopolysiloxane emulsion composition.

The organopolysiloxane (A) preferably has a viscosity at 25°C of 90,000 mPa·s or more.

By setting the viscosity of the organopolysiloxane (A) at 25°C at 90,000 mPa·s or more, it is possible to meet the need for making an organopolysiloxane having a higher viscosity an emulsion.

The nonionic surfactant (B) preferably comprises one or two or more kinds of nonionic surfactants selected from polyoxyalkylene alkyl ether, polyoxyalkylene sorbitan fatty acid ester, polyoxyalkylene fatty acid ester, and polyglycerin fatty acid ester, each of which has an HLB of 14 to 18.

By using the nonionic surfactant (B), the particle diameter can be easily reduced, and it becomes easier to obtain an organopolysiloxane emulsion composition having high transparency.

The present invention can provide the organopolysiloxane emulsion composition with a light transmittance of 40% or more.

When blended in final products, such as cosmetics and personal care compositions, the transparency of the final products is not deteriorated.

It is possible to provide the organopolysiloxane emulsion composition of which 100 parts by mass contains 15 to 45 parts by mass of the organopolysiloxane (A).

This prevents the degree of freedom of incorporation into final products, such as cosmetics and personal care compositions, from decreasing, and also prevents emulsion composition from having higher viscosity during production, resulting in difficult manufacturing or handling.

The inventive organopolysiloxane emulsion composition is manufactured according to the following method comprising the steps of:
(I) emulsifying a mixture of
   (A-1) 100 parts by mass of organopolysiloxane represented by the following general formula (1), containing each of octamethylcyclotetrasiloxane, decamethylcyclopentasiloxane, and dodecamethylcyclohexasiloxane in an amount of 2,000 ppm or less, and having silanol groups at both molecular chain ends,

      HO(R¹2SiO)ₙH (1)

      wherein R¹ independently represents a hydrogen atom or a substituted or unsubstituted monovalent hydrocarbon group having 1 to 20 carbon atoms, and "n" represents a number that makes a kinematic viscosity at 25°C of the organopolysiloxane 10 mm²/s or more and less than 200 mm²/s,
   (B) 10 to 50 parts by mass of a nonionic surfactant having an HLB of 12 to 18,
   (C) 10 to 45 parts by mass of an anionic surfactant, and
   (D) 20 to 1,000 parts by mass of water, with an emulsifying apparatus that reduces a diameter of the emulsion particle due to shearing force or pressure, and preparing the emulsion composition to have the average particle diameter of 100 nm or less; and
(II) emulsion-polymerizing the obtained emulsion composition at a temperature of 40°C or lower in the presence of a acid catalyst (E), the addition of the acid catalyst optionally being omitted when the anionic surfactant (C) has a catalytic action, stopping the reaction by adding a neutralizing agent (F), and preparing the emulsion composition in which an organopolysiloxane (A), being a condensation reaction product of the formed component (A-1), has a viscosity at 25°C of 30,000 mPa·s or more, octamethylcyclotetrasiloxane, decamethylcyclopentasiloxane, and dodecamethylcyclohexasiloxane are each contained in amount of 10,000 ppm or less in the organopolysiloxane, and the average particle diameter of the emulsion composition is 100 nm or less.

By the above-mentioned production method, it is possible to produce an emulsion composition in which the viscosity of the organopolysiloxane (A) in the emulsion composition is 30,000 mPa·s or more, the contained amounts of octamethylcyclotetrasiloxane, decamethylcyclopentasiloxane, and dodecamethylcyclohexasiloxane in the organopolysiloxane are each 10,000 ppm or less, and the average particle diameter of the emulsion composition is 100 nm or less.

the organopolysiloxane (A) in the organopolysiloxane emulsion composition may have a viscosity at 25°C of 90,000 mPa·s or more.

By making the viscosity at 25°C of the organopolysiloxane (A) 90,000 mPa·s or more, it is possible to meet the need to make an organopolysiloxane with a higher viscosity an emulsion.

A nonionic surfactant comprising one or two or more kinds of nonionic surfactants selected from polyoxyalkylene alkyl ether, polyoxyalkylene sorbitan fatty acid ester, polyoxyalkylene fatty acid ester, and polyglycerin fatty acid ester, each having an HLB of 14 to 18, is preferably used as the nonionic surfactant (B).

By using the nonionic surfactant (B) mentioned above, it becomes easier to reduce the particle diameter, and it becomes easier to obtain the organopolysiloxane emulsion composition with high transparency.

The method for manufacturing an organopolysiloxane emulsion composition may comprise a step (III) of blending 0 to 50 parts by mass of the anionic surfactant (C) and making the total blending amount thereof 10 to 60 parts by mass based on 100 parts by mass of the organopolysiloxane (A) after the step (II).

By adding this step, transparency of the appearance can be further improved.

The polymerizing is preferably performed at 25°C or lower in the step (II).

This makes it possible to reduce by-production of octamethylcyclotetrasiloxane, decamethylcyclopentasiloxane, and dodecamethylcyclohexasiloxane.

Polymerization time in the polymerizing is preferably 48 hours or less in the step (II).

This ensures that the by-products of octamethylcyclotetrasiloxane, decamethylcyclopentasiloxane, and dodecamethylcyclohexasiloxane are reduced.

The organopolysiloxane emulsion composition preferably has a light transmittance of 40% or more.

This makes it possible to more reliably prevent the transparency of the final product from being impaired when incorporated into final products, such as cosmetics and personal care compositions.

The organopolysiloxane emulsion composition containing 15 to 45 parts by mass of the organopolysiloxane (A) based on 100 parts by mass of the organopolysiloxane emulsion composition may be manufactured.

This prevents the degree of freedom of incorporation into final products, such as cosmetics and personal care compositions, from decreasing, and also prevents emulsion composition from having higher viscosity during production, resulting in difficult manufacturing or handling.

The emulsifying apparatus reducing the diameter of the emulsion particle in the step (I) is preferably a high-pressure homogenizer.

This makes it easier to obtain an organopolysiloxane emulsion composition with a sufficiently small particle diameter.

### ADVANTAGEOUS EFFECTS OF INVENTION

According to the present invention, it is possible to obtain an organopolysiloxane emulsion composition containing an organopolysiloxane having a viscosity of 30,000 mPa·s or higher at 25°C and each content of octamethylcyclotetrasiloxane, decamethylcyclopentasiloxane, and dodecamethylcyclohexasiloxane at 10,000 ppm or less, and being transparent with an average particle diameter of 100 nm or less.

### DESCRIPTION OF EMBODIMENTS

As described above, it has been desired to provide: an organopolysiloxane emulsion composition containing an organopolysiloxane with a viscosity of 30,000 mPa·s or higher at 25°C, containing reduced contents of octamethylcyclotetrasiloxane, decamethylcyclopentasiloxane, and dodecamethylcyclohexasiloxane, and being fine and transparent with an average particle diameter of 100 nm or less of the emulsion; and a method for manufacturing the same.

As a result of diligent study of the above problems, the inventor found that it was possible to provide the following organopolysiloxane emulsion composition and a methods for manufacturing the same, and has completed the present invention.

The inventive organopolysiloxane emulsion composition is an organopolysiloxane emulsion composition having an average particle diameter of 100 nm or less and comprising:
(A) 100 parts by mass of organopolysiloxane having a viscosity at 25°C of 30,000 mPa·s or more, containing octamethylcyclotetrasiloxane, decamethylcyclopentasiloxane, and dodecamethylcyclohexasiloxane, each in an amount of 10,000 ppm or less, and being a condensation reaction product of organopolysiloxane represented by the following general formula (1) and having silanol groups at both molecular chain ends,

   HO(R¹2SiO)ₙH (1)

   wherein R¹ independently represents a hydrogen atom or a substituted or unsubstituted monovalent hydrocarbon group having 1 to 20 carbon atoms, and "n" represents a number that makes a kinematic viscosity at 25°C of the organopolysiloxane 10 mm²/s or more and less than 200 mm²/s;
(B) 10 to 50 parts by mass of a nonionic surfactant having an HLB of 12 to 18;
(C) 10 to 60 parts by mass of an anionic surfactant; and
(D) 20 to 1,000 parts by mass of water.

The inventive method for manufacturing the organopolysiloxane emulsion composition is a method for manufacturing the organopolysiloxane emulsion composition comprising the steps of:
(I) emulsifying a mixture of
   (A-1) 100 parts by mass of organopolysiloxane represented by the following general formula (1), and containing each of octamethylcyclotetrasiloxane, decamethylcyclopentasiloxane, and dodecamethylcyclohexasiloxane in an amount of 2,000 ppm or less,

      HO(R¹2SiO)ₙH (1)

      wherein R¹ independently represents a hydrogen atom or a substituted or unsubstituted monovalent hydrocarbon group having 1 to 20 carbon atoms, and "n" represents a number that makes a kinematic viscosity at 25°C of the organopolysiloxane 10 mm²/s or more and less than 200 mm²/s,
   (B) 10 to 50 parts by mass of a nonionic surfactant having an HLB of 12 to 18,
   (C) 10 to 45 parts by mass of an anionic surfactant, and
   (D) 20 to 1,000 parts by mass of water, with an emulsifying apparatus that reduces a diameter of the emulsion particle due to shearing force or pressure, and preparing the emulsion composition to have the average particle diameter of 100 nm or less; and
(II) emulsion-polymerizing the obtained emulsion composition at a temperature of 40°C or lower in the presence of a acid catalyst (E), the addition of the acid catalyst optionally being omitted when the anionic surfactant (C) has a catalytic action, stopping the reaction by adding a neutralizing agent (F), and preparing the emulsion composition in which an organopolysiloxane (A), being a condensation reaction product of the formed component (A-1), has a viscosity at 25°C of 30,000 mPa·s or more, octamethylcyclotetrasiloxane, decamethylcyclopentasiloxane, and dodecamethylcyclohexasiloxane are each contained in amount of 10,000 ppm or less in the organopolysiloxane, and the average particle diameter of the emulsion composition is 100 nm or less.

Hereinafter, the present invention will be described.

### <(A) Organopolysiloxane>

The organopolysiloxane as the component (A) is a condensation reaction product of organopolysiloxane represented by the following general formula (1) and having silanol groups at both molecular chain ends.

HO(R¹2SiO)ₙH (1)

In the formula, R¹ independently represents a hydrogen atom or a substituted or unsubstituted monovalent hydrocarbon group having 1 to 20 carbon atoms, and "n" represents a number that makes a kinematic viscosity at 25°C of the organopolysiloxane 10 mm²/s or more and less than 200 mm²/s .

The kinematic viscosity is a value measured at 25°C by a Cannon-Fenske viscometer.

R¹ independently represents a hydrogen atom or a substituted or unsubstituted monovalent hydrocarbon group having 1 to 20 carbon atoms. Examples of the unsubstituted monovalent hydrocarbon group having 1 to 20 carbon atoms include alkyl groups having 1 to 20 carbon atoms, cycloalkyl groups having 3 to 20 carbon atoms, alkenyl groups having 2 to 20 carbon atoms, aryl groups having 6 to 20 carbon atoms, and aralkyl groups having 7 to 20 carbon atoms. Specific examples include: the alkyl groups, such as a methyl group, an ethyl group, a propyl group, a butyl group, a pentyl group, a hexyl group, a heptyl group, an octyl group, a nonyl group, a decyl group, a dodecyl group, a tetradecyl group, a hexadecyl group, and an octadecyl groups; cycloalkyl groups, such as a cyclopentyl group and a cyclohexyl group; alkenyl groups, such as a vinyl group and an aryl group; and aryl groups, such as a phenyl group, a tolyl group, and a naphthyl group. Examples of the substituted monovalent hydrocarbon group having 1 to 20 carbon atoms include the above-listed monovalent hydrocarbon groups having 1 to 20 carbon atoms in which some of the hydrogen atoms are substituted with a halogen atom, an amino group, an acryloxy group, a methacryloxy group, an epoxy group, a mercapto group, a carboxyl group, a hydroxyl group, or the like. It is preferably a monovalent hydrocarbon group having 1 to 6 carbon atoms, the examples include a methyl group, an ethyl group, a propyl group, a butyl group, and a phenyl group. It is more preferable that 80% or more of all R¹s are a methyl group.

"n" represents a number that makes a kinematic viscosity at 25°C of the organopolysiloxane 10 mm²/s or more and less than 200 mm²/s, preferably 15 mm²/s or more and less than 160 mm²/s, more preferably 20 mm²/s or more and less than 120 mm²/s, and further preferably 30 mm²/s or more and less than 80 mm²/s. When the kinetic viscosity is less than 10 mm²/s, the emulsion-polymerization time must be extended in order to achieve the desired viscosity of the organopolysiloxane (A), being a condensation reaction product of the organopolysiloxane having silanol groups at both molecular chain ends and represented by the general formula (1), and the amounts of octamethylcyclotetrasiloxane, decamethylcyclopentasiloxane, and dodecamethylcyclohexasiloxane produced as a by-product during emulsion-polymerization increase. On the other hand, when the kinetic viscosity is more than 200 mm²/s, it becomes difficult to reduce the particle diameter of the resulting target emulsion.

The contained amounts of octamethylcyclotetrasiloxane, decamethylcyclopentasiloxane, and dodecamethylcyclohexasiloxane in 100 parts by mass of organopolysiloxane represented by the general formula (1) and having silanol groups at both molecular chain ends are each 2,000 ppm or less, particularly preferably 1,000 ppm or less, and more preferably 500 ppm or less. The lower limit is not particularly limited, but may be 80 ppm, 40 ppm, 10 ppm, or 0 ppm.

The organopolysiloxane as the component A is a condensation reaction product of organopolysiloxane represented by the above general formula (1) and having silanol groups at both molecular chain ends, and can be obtained by the steps (I) and (II) described later. The viscosity of the organopolysiloxane as the component (A) is 30,000 mPa·s or more, preferably 90,000 mPa·s or more, and more preferably 180,000 mPa·s or more. The upper limit is not particularly limited, but it may be, for example, 1 million mPa·s or less.

This viscosity is a value measured at 25°C using a rotational viscometer.

The amounts of octamethylcyclotetrasiloxane, decamethylcyclopentasiloxane, and dodecamethylcyclohexasiloxane contained in the organopolysiloxane as the component (A) are each 10,000 ppm or less, preferably 8,000 ppm or less, and more preferably 6,000 ppm or less. There is no particular lower limit, and it may be 1,000 ppm, 500 ppm, or 0 ppm.

The organopolysiloxane as the component (A) is dispersed in water in a particulate state. The average particle diameter is 100 nm or less, preferably 90 nm or less, and more preferably 80 nm or less. The lower limit is not particularly limited, but may be about 10 nm or more. In the present invention, the average particle diameter is a Stokes diameter measured by a dynamic light scattering method.

### <(B) Nonionic Surfactant>

In the present invention, the nonionic surfactant as the component (B) functions as a dispersant for the organopolysiloxane as the component (A) in the organopolysiloxane emulsion composition, and also serves as an emulsifier in emulsifying the organopolysiloxane represented by the general formula (1) and having silanol groups at both molecular chain ends. One kind of the nonionic surfactant may be used, or two or more kinds of thereof may be used in combination.

Examples of the nonionic surfactants include polyoxyalkylene alkyl ethers, polyoxyalkylene alkylphenyl ethers, polyoxyalkylene fatty acid esters, polyoxyalkylene sorbitan fatty acid esters, polyglycerin fatty acid esters, sorbitan fatty acid esters, and glycerin fatty acid esters. Among these, it is preferable to include those represented by the general formula (2),

R²O(EO)ₚ(PO)_{q}H (2)

wherein R² represents a linear or branched alkyl group having 8 to 30 carbon atoms, EO represents an ethylene oxide group, PO represents a propylene oxide group, and the arrangement thereof may be blocked or random. "p" and "q" represent independent integers, "p" represents 4 to 100, and "q" represents 0 to 100. In particular, in formula (2), R² is preferably a linear or branched alkyl group having 8 to 18 carbon atoms. "p" is preferably 8 to 50, and more preferably 12 to 40. "q" is preferably 0 to 30, more preferably 0 to 20, and further preferably 0 to 10.

The HLB of the component (B) is 12 to 18, preferably 13 to 18, and more preferably 14 to 18. When two types of nonionic surfactants are used, the HLB of the mixture is expressed as (W_{A}HLB_{A}+W_{B}HLB_{B}) / (W_{A}+W_{B}), where W_{A} and HLB_{A} are the weight and the known HLB of the first nonionic surfactant (A), respectively, and W_{B} and HLB_{B} are the weight and the known HLB of the second nonionic surfactant (B), respectively, and it is preferable that the HLB of the mixture is in the above range.

The blended amount of the component (B) is 10 to 50 parts by mass, preferably 15 to 45 parts by mass, and more preferably 20 to 40 parts by mass, based on 100 parts by mass of the organopolysiloxane as the component (A). When the amount is less than 10 parts by mass, it is difficult to reduce the particle diameter to the target particle size, and when the amount is more than 50 parts by mass, the emulsion-polymerization process time until the target viscosity of the organopolysiloxane is reached becomes long, or the viscosity of the emulsion composition during production becomes high, making the production difficult and handling difficult.

### <(C) Anionic Surfactant>

In the present invention, while the anionic surfactant as the component (C) functions as a dispersant for the organopolysiloxane as the component (A) in the organopolysiloxane emulsion composition, the anionic surfactant is used as an emulsifier in emulsifying the organopolysiloxane represented by the general formula (1) and having silanol groups at both molecular chain ends and may act as an acid catalyst in the emulsion-polymerization process. Furthermore, it can also be used as an additive for improving transparency of the appearance of the organopolysiloxane emulsion composition. One kind of the anionic surfactants may be used, or two or more kinds thereof may be used in appropriate combination.

Examples of anionic surfactants include the following.
[1] Alkyl sulfate or a salt thereof represented by the following general formula (3)

   R³OSO₃M (3)

   In the formula, R³ represents a linear or branched alkyl group having 6 to 30 carbon atoms, and "M" represents: a hydrogen ion; alkali metal ions, such as potassium and sodium; alkaline earth metal ions, such as magnesium and calcium; ammonium ions; or tertiary ammonium ions, such as triethanolammonium.

In the general formula (3), R³ represents preferably a linear, or branched alkyl group having 6 to 12 carbon atoms, and "M" is preferably a sodium ion, a potassium ion, an ammonium ion, or a triethanolammonium ion from the viewpoint of emulsification effect.

Specific examples of the alkyl sulfate or a salt thereof represented by the general formula (3) include: hexyl sulfate; octyl sulfate; decyl sulfate; dodecyl sulfate; tetradecyl sulfate; hexadecyl sulfate; octadecyl sulfate; icosyl sulfate; alkali metal salts thereof, such as lithium salts, sodium salts, and potassium salts; alkaline earth metal salts thereof, such as magnesium salts and calcium salts; triethanolammonium salts; and ammonium salts.

[2] Alkylbenzenesulfonic acid or a salt thereof represented by the following general formula (4)

R³-C₆H₄-SO₃M (4)

In the formula, R³ represents a linear or branched alkyl group having 6 to 30 carbon atoms as defined in the general formula (3), and "M" represents: a hydrogen ion; alkali metal ions, such as potassium and sodium; alkaline earth metal ions, such as magnesium and calcium; an ammonium ion; or tertiary ammonium ions, such as triethanolammonium, as defined in general formula (3).

In the general formula (4), R³ represents preferably a linear or branched alkyl group having 6 to 12 carbon atoms, and "M" represents preferably a sodium ion, a potassium ion, an ammonium ion, or a triethanolammonium ion from the viewpoint of emulsification effect.

Specific examples of the alkylbenzenesulfonic acid or a salt thereof represented by the general formula (4) include hexylbenzenesulfonic acid, octylbenzenesulfonic acid, decylbenzenesulfonic acid, dodecylbenzenesulfonic acid, tetradecylbenzenesulfonic acid, hexadecylbenzenesulfonic acid, and salts thereof.

### [3] Higher fatty acids and salts thereof

Specific examples of higher fatty acids and salts thereof include: lauric acid; stearic acid; oleic acid; linoleic acid; alkali metal salts thereof, such as lithium salts, sodium salts, and potassium salts; alkaline earth metal salts thereof, such as magnesium salts and calcium salts; triethanolammonium salts; and ammonium salts.

[4] Polyoxyalkylene alkyl ether sulfate represented by the following general formula (5) and salt thereof

R³O(EO)ᵣ(PO)ₛSO₃M (5)

In the formula, R³ represents a linear or branched alkyl group having 6 to 30 carbon atoms as defined in the general formula (3), and "M" represents: a hydrogen ion; alkali metal ions, such as potassium and sodium; alkaline earth metal ions, such as magnesium and calcium; ammonium ions; or tertiary ammonium ions, such as triethanolammonium, as defined in the general formula (3). EO represents an ethylene oxide group, PO represents a propylene oxide group, and the arrangement thereof may be blocked or random, and "r" and "s" each independently represent an integer of 0 to 100, with the proviso of r+s>0.

Specific examples of polyoxyalkylene alkyl ether sulfates and salts thereof include: polyoxyethylene hexyl ether sulfate; polyoxyethylene octyl ether sulfate; polyoxyethylene decyl ether sulfate; polyoxyethylene dodecyl ether sulfate; polyoxyethylene tetradecyl ether sulfate; polyoxyethylene hexadecyl ether sulfate; polyoxyethylene octadecyl ether sulfate; polyoxyethylene eicosyl ether sulfate; lithium salts thereof; alkaline metal salts, such as sodium salts and potassium salts; alkaline earth metal salts, such as magnesium salts and calcium salts; triethanolammonium salts; and ammonium salts.

[5] Polyoxyalkylene alkylphenyl ether sulfates represented by the following general formula (6) and salts thereof

R³-C₆H₄-O(EO)ᵣ(PO)ₛSO₃M (6)

In the formula, R³ represents a linear or branched alkyl group having 6 to 30 carbon atoms as defined in the general formula (3), and "M" represents: a hydrogen ion; alkali metal ions, such as potassium and sodium; alkaline earth metal ions, such as magnesium and calcium; ammonium ions; or tertiary ammonium ions, such as triethanolammonium, as defined in the general formula (3). EO, PO, "r", and "s" represent as defined in the general formula (5). EO represents an ethylene oxide group, PO represents a propylene oxide group, and the arrangement thereof may be blocked or random. "r" and "s" represent independently integers of 0 to 100, with the proviso of r+s>0.

Specific examples of polyoxyalkylene alkyl phenyl ether sulfates and salts thereof include: polyoxyethylene hexyl phenyl ether sulfate; polyoxyethylene octyl phenyl ether sulfate; polyoxyethylene decyl phenyl ether sulfate; polyoxyethylene dodecyl phenyl ether sulfate; polyoxyethylene tetradecyl phenyl ether sulfate; polyoxyethylene hexadecyl phenyl ether sulfate; lithium salts thereof; alkaline metal salts, such as sodium salts and potassium salts; alkaline earth metal salts, such as magnesium salts and calcium salts; triethanolammonium salts; and ammonium salts.

The blending amount of the anionic surfactant as the component (C) is 10 to 60 parts by mass, preferably 15 to 55 parts by mass, more preferably 20 to 50 parts by mass, based on 100 parts by mass of the organopolysiloxane (A). When it is less than 5 parts by mass, it is difficult to reduce the particle diameter to the target particle diameter, but since anionic surfactants may exhibit skin irritation and environmental toxicity, it is preferable to use less of them as long as they can function as an emulsifier, an acid catalyst, or an additive.

<(D) Water>

In the present invention, the water as the component (D) is a dispersion medium for the organopolysiloxane as the component (A). The blending amount of the component (D) is 20 to 1,000 parts by mass, preferably 50 to 800 parts by mass, and more preferably 100 to 600 parts by mass, based on 100 parts by mass of the organopolysiloxane as the component (A). When the amount is less than 20 parts by mass, the viscosity of the emulsion composition during production becomes high, making it difficult to produce or handle the emulsion composition, whereas when the amount is more than 1,000 parts by mass, the concentration of the component (A) in the emulsion composition is low, reducing the degree of freedom in blending it into final products, such as cosmetics and personal care compositions.

### <(E) Acid Catalyst>

In the present invention, the acid catalyst as the component (E) is a catalyst in the emulsion-polymerization process. When the component (C) acts as an acid catalyst, the component (E) may not be necessary. In addition, one kind as the component (E) may be used, or two or more kinds as the component (E) may be used in appropriate combination.

Examples of the component (E) include the following components.
[1] Examples include alkyl sulfuric acid represented by the following general formula (7) and the alkylbenzene sulfonic acid represented by the following general formula (8).

   R³OSO₃H (7)

In the formula, R⁴ represents a linear or branched alkyl group having 6 to 30 carbon atoms.

R⁴-C₆H₄-SO₃H (8)

In the formula, R⁴ represents a linear or branched alkyl group having 6 to 30 carbon atoms, as defined in the general formula (7).

In the formulae (7) and (8), R⁴ is preferably a linear or branched alkyl group having 6 to 12 carbon atoms.

Specific examples of the alkyl sulfate represented by the general formula (7) include hexyl sulfate, octyl sulfate, decyl sulfates, dodecyl sulfates, tetradecyl sulfates, hexadecyl sulfates, octadecyl sulfates, and icosyl sulfate.

Specific examples of the alkylbenzenesulfonic acid represented by the general formula (8) include hexylbenzenesulfonic acid, octylbenzenesulfonic acid, decylbenzenesulfonic acid, dodecylbenzenesulfonic acid, tetradecylbenzenesulfonic acid, and hexadecylbenzenesulfonic acid.

### [2] Higher Fatty Acids

Specific examples include lauric acid, stearic acid, oleic acid, and linoleic acid.

[3] Polyoxyalkylene alkyl ether sulfate represented by the following general formula (9)

R⁴O(EO)ₜ(PO)ᵤSO₃H (9)

In the formula, R⁴ represents a linear or branched alkyl group having 6 to 30 carbon atoms as defined in general formula (7). EO represents an ethylene oxide group, PO represents a propylene oxide group, and the arrangement thereof may be blocked or random. "t" and "u" are independently integers of 0 to 100, with the proviso of t+u>0.

Specific examples include polyoxyethylene hexyl ether sulfate, polyoxyethylene octyl ether sulfate, polyoxyethylene decyl ether sulfate, polyoxyethylene dodecyl ether sulfate, polyoxyethylene tetradecyl ether sulfate, polyoxyethylene hexadecyl ether sulfate, polyoxyethylene octadecyl ether sulfate, and polyoxyethylene eicosyl ether sulfate.

[4] Polyoxyalkylene alkylphenyl ether sulfate represented by the following general formula (10):

R⁴-C₆H₄-O(EO)ₜ(PO)ᵤSO₃H (10)

In the formula, R⁴ represents a linear or branched alkyl group having 6 to 30 carbon atoms, as defined in the formula (7). EO, PO, "t", and "u" are as defined in the formula (9), where EO represents an ethylene oxide group, PO represents a propylene oxide group, and the arrangement thereof may be blocked or random. "t" and "u" are independently integers from 0 to 100, with the proviso of t+u>0.

Specific examples include polyoxyethylene hexyl phenyl ether sulfate, polyoxyethylene octyl phenyl ether sulfate, polyoxyethylene decyl phenyl ether sulfate, polyoxyethylene dodecyl phenyl ether sulfate, polyoxyethylene tetradecyl phenyl ether sulfate, and polyoxyethylene hexadecyl phenyl ether sulfate.

### [5] Bronsted acid

Examples of the bronsted acid include hydrochloric acid, hydrobromic acid, sulfuric acid, chlorosulfonic acid, phosphoric acid, orthophosphoric acid, metaphosphoric acid, polyphosphoric acid, boric acid, nitric acid, benzenesulfonic acid, methanesulfonic acid, trifluoromethanesulfonic acid, carboxylic acid, chloroacetic acid, trichloroacetic acid, acetic acid, acrylic acid, benzoic acid, trifluoroacetic acid, citric acid, crotonic acid, formic acid, fumaric acid, maleic acid, malonic acid, tannic acid, itaconic acid, lactic acid, tartaric acid, oxalic acid, phthalic acid, and succinic acid.

It is considered that when the acid catalyst as the component (E) is added, it undergoes ion exchange with the anionic surfactant as the component (C), and the component (C) acts as an acid catalyst. The blending amount of the component (E) may be an amount that allows emulsion-polymerization to proceed, and is 0.15 to 1.4 molar equivalents, and preferably 0.2 to 1.2 molar equivalents, relative to the anionic surfactant of component (C). When the amount is 0.15 molar equivalents or more, the polymerization rate becomes appropriate, and when the amount is 1.4 molar equivalents or less, the amounts of octamethylcyclotetrasiloxane, decamethylcyclopentasiloxane, and dodecamethylcyclohexasiloxane produced as by-products in the emulsion-polymerization process become small.

### <(F) Neutralizing Agent>

In the present invention, the neutralizing agent as the component (F) is a neutralizing agent for neutralizing the acid catalyst as the component (C) and/or the component (E) and terminating the polymerization reaction. The blending amount of the component (F) may be any amount that terminates the polymerization reaction, and is 1.0 to 1.4 molar equivalents, preferably 1.05 to 1.3 molar equivalents, and more preferably 1.1 to 1.2 molar equivalents relative to the acid catalyst for the component (E). When the amount is 1.0 molar equivalent or more, rapid neutralization is achieved, and when the amount is 1.4 molar equivalent or less, the salt does not become excessive and the stability of the emulsion is improved. Examples of basic substances include sodium hydroxide, potassium hydroxide, sodium carbonate, sodium hydrogen carbonate, and amine compounds, such as triethanolamine and triethylamine.

### <Other Components>

The inventive organopolysiloxane emulsion composition may contain a water-soluble polymeric compound for the purpose such as improving the dispersibility of the organopolysiloxane (A). Examples of the water-soluble polymeric compound include vinyl alcohol polymers, copolymers of vinyl alcohol and vinyl acetate, acrylamide polymers, vinylpyrrolidone polymers, copolymers of vinylpyrrolidone and vinyl acetate, polyethylene glycol, isopropylacrylamide polymers, methyl vinyl ether polymers, starch, methylcellulose, hydroxyethylcellulose, hydroxypropylmethylcellulose, guar gum, and xanthan gum.

The inventive organopolysiloxane emulsion composition may contain an antimicrobial preservative or an antimicrobial agent for the purpose of improving storage stability. Examples of the antimicrobial preservatives include paraoxybenzoic acid alkyl ester, benzoic acid, sodium benzoate, sorbic acid, potassium sorbate, phenoxyethanol, and isothiazolinone derivatives. Examples of the antimicrobial agents include benzoic acid, salicylic acid, phenol, sorbic acid, paraoxybenzoic acid alkyl ester, p-chloro-m-cresol, hexachlorophene, benzalkonium chloride, chlorhexidine chloride, trichlorocarbanilide, photosensitizers, and phenoxyethanol. In addition, fragrances, antioxidants, rust inhibitors, dyes, etc. may also be added.

When the inventive organopolysiloxane emulsion composition is used for weather strip, a fiber treatment agent, and a resin modification application, the addition of alkoxysilanes, such as R⁵₃Si(OR⁶), R⁵₂Si(OR⁶)₂, and R⁵Si(OR⁶)₃, makes it possible to introduce branching units and various functional groups into the resulting organopolysiloxane chain. Here, R⁵ is a hydrogen atom or a substituted or unsubstituted monovalent hydrocarbon group having 1 to 20 carbon atoms, preferably 1 to 6 carbon atoms, such as a methyl group, an ethyl group, a propyl group, a butyl group, and a phenyl group. R⁶ is the same or different alkyl group having 1 to 20 carbon atoms or a hydrogen atom.

Next, the inventive production method will be described.

### <Step (I)>

The step (I) is a step of emulsifying a mixture of (A-1) 100 parts by mass of organopolysiloxane represented by the following general formula (1), containing each of octamethylcyclotetrasiloxane, decamethylcyclopentasiloxane, and dodecamethylcyclohexasiloxane in an amount of 2,000 ppm or less, and having silanol groups at both molecular chain ends,

HO(R¹2SiO)ₙH (1)

wherein R¹ independently represents a hydrogen atom or a substituted or unsubstituted monovalent hydrocarbon group having 1 to 20 carbon atoms, and "n" represents a number that makes a kinematic viscosity at 25°C of the organopolysiloxane 10 mm²/s or more and less than 200 mm²/s,
(B) 10 to 50 parts by mass of a nonionic surfactant having an HLB of 12 to 18,
(C) 10 to 45 parts by mass of an anionic surfactant, and
(D) 20 to 1,000 parts by mass of water, with an emulsifying apparatus that reduces a diameter of the emulsion particle due to shearing force or pressure, and preparing the emulsion composition to have the average particle diameter of 100 nm or less.

The mixture containing the components (A-1), (B), (C) and (D) is emulsified to prepare an emulsion composition. Examples of the emulsification device include: high-speed centrifugal radial mixers, such as a dispersing mixer; a high-speed rotary shear-type mixer, such as a homomixer; a high-pressure injection emulsifying and dispersing apparatuses, such as a pressure-type homogenizer; a colloid mill; and an ultrasonic emulsifier.

In this step, the emulsification temperature is preferably 1 to 50°C. When the component (B) has a catalytic effect, the cyclization reaction also proceeds at the same time, so the emulsification is preferably carried out at a temperature of less than 40°C. When the emulsification is carried out at a temperature of 40°C or higher, there is a possibility that large amounts of octamethylcyclotetrasiloxane, decamethylcyclopentasiloxane, and dodecamethylcyclohexasiloxane will be produced as by-products. For this reason, the temperature is preferably less than 30°C, and more preferably less than 25°C.

In emulsifying, the pressure may be not only normal pressure but also reduced pressure or increased pressure. When emulsifying under reduced pressure or increased pressure, bubbles are less likely to be mixed in, and emulsification may be more effective. When reducing the pressure, it is preferable that the pressure is higher than the vapor pressure of the raw materials so that the raw materials do not volatilize.

In this step (I), the above mixture is subjected to high shear force to reduce the particle diameter until the average particle diameter of the emulsion composition becomes 100 nm or less, preferably 90 nm or less, and more preferably 80 nm or less. The smaller the particle diameter of the emulsion particles obtained in the step (I), the more transparent the appearance is. Furthermore, since the average particle diameter of the emulsion particles in the emulsion composition obtained in the step (I) is 100 nm or less, as a result, the average particle diameter of the final emulsion particles obtained in the next step can also be 100 nm or less. However, depending on the composition ratio of the components (A-1), (B), (C) and (D), the stability of the emulsion composition may be poor. Even if the average particle diameter can be adjusted to 100 nm or less in the step (I), the average particle diameter may become 100 nm or more in the step (II) described later. Therefore, the composition ratio of components (A-1), (B), (C) and (D) must be those specified in the step (I). In the present invention, the average particle diameter is a Stokes diameter measured by a dynamic light scattering method using a nanoparticle diameter measuring apparatus (DelsaMax CORE, manufactured by Beckman Coulter, Inc.).

### <Step (II)>

The step (II) is a step of emulsion-polymerizing the obtained emulsion composition at a temperature of 40°C or lower in the presence of a acid catalyst (E), the addition of the acid catalyst optionally being omitted when the anionic surfactant (C) has a catalytic action, stopping the reaction by adding a neutralizing agent (F), and preparing the emulsion composition in which an organopolysiloxane (A), being a condensation reaction product of the formed component (A-1), has a viscosity of 30,000 mPa·s or more, octamethylcyclotetrasiloxane, decamethylcyclopentasiloxane, and dodecamethylcyclohexasiloxane are each contained in amount of 10,000 ppm or less in the organopolysiloxane, and the average particle diameter of the emulsion composition is 100 nm or less.

To the obtained emulsion composition, water (D) is added as necessary to disperse the composition, and then the component (E) is added at a temperature of 40°C or less, and the emulsion-polymerization is performed preferably until the viscosity of the organopolysiloxane at 25°C becomes 30,000 mPa·s or more, and then the polymerization reaction is stopped by adding the component (F).

When the emulsion-polymerization of the emulsion composition is performed, it is recommended that the polymerization process be performed for 48 hours or less at a temperature of 40°C or less. When the polymerization is performed at a temperature of 40°C or higher, there is a possibility that secondarily production of octamethylcyclotetrasiloxane, decamethylcyclopentasiloxane, and dodecamethylcyclohexasiloxane as by-products will increase. Therefore, the polymerization temperature is preferably less than 25°C, and more preferably less than 15°C. Although there is no particular limitation on the lower limit, it is about 0°C or higher. Furthermore, when the polymerization time is 48 hours or less, the by-products of octamethylcyclotetrasiloxane, decamethylcyclopentasiloxane, and dodecamethylcyclohexasiloxane are reduced, and therefore a polymerization time is preferably 1 to 36 hours, and more preferably 5 to 24 hours.

The organopolysiloxane (A) manufactured by the emulsion-polymerization in the step (II) has a viscosity at 25°C of 30,000 mPa·s or more, preferably 90,000 mPa·s or more, and more preferably 180,000 mPa·s or more. There is no particular upper limit, but it may be, for example, 1 million mPa·s or less.

### <Step (III)>

In order to improve transparency of the appearance, an additive is added. An anionic surfactant (C) can be used as the additive. In this case, the amount of the anionic surfactant (C) is not particularly limited, but it is preferably 0 to 50 parts by mass, and the total amount of the anionic surfactant (C) including one used in the step (I) is preferably 10 to 60 parts by mass. Polyhydric alcohols, such as 1,3-butylene glycol and glycerin, may also be used. The blending amount of the additive is not particularly limited and may be determined in consideration of stability, transparency, or the like required when the additive is added to the final product, and may be 0 to 10 parts by mass for example.

### <Other Treatment>

The silicone concentration may be adjusted by adding water. In addition, it is also possible to add water-soluble polymers, antimicrobial preservatives, antimicrobial agents, alkoxysilanes, etc.

The inventive organopolysiloxane emulsion composition will now be described. The average particle diameter of the inventive organopolysiloxane emulsion composition is 100 nm or less, preferably 90 nm or less, and more preferably 80 nm or less. The lower limit is not particularly limited, but is about 10 nm or more. In the present invention, the average particle diameter is a Stokes diameter measured by a dynamic light scattering method using a nanoparticle diameter measuring apparatus (DelsaMax CORE, manufactured by Beckman Coulter, Inc.).

The light transmittance of the inventive organopolysiloxane emulsion composition is 40% or more, preferably 50% or more, and more preferably 60% or more. When the light transmittance is less than 40%, the transparency of the final product may be deteriorated in case that the composition is blended into final products, such as a cosmetic and a personal care composition. There is no particular upper limit, and it may be 100%. In the present invention, the light transmittance is a value measured using a UV-Vis spectrophotometer (U-3310, manufactured by Hitachi High-Tech Science Corporation) at a wavelength of 500 nm.

The inventive organopolysiloxane emulsion composition contains the organopolysiloxane (A) in amount of 15 to 45 parts by mass, and preferably 20 to 40 parts by mass based on 100 parts by mass of the organopolysiloxane emulsion composition. When the amount is 15 parts by mass or more, the concentration of the organopolysiloxane (A) is sufficient, so that the degree of freedom in blending it into final products, such as a cosmetic and a personal care composition, is increased. On the other hand, when the amount is 45 parts by mass or less, the viscosity of the emulsion composition does not become too high during production, and production and handling are easy.

### EXAMPLE

Hereinafter, the present invention will be specifically described with reference to Examples and Comparative Examples. However, the present invention is not limited thereto. The blending amounts, etc. of the components used in the Examples are shown in Table 1, and the blending amounts, etc. used in the Comparative Examples are shown in Table 2. The kinetic viscosity of the organopolysiloxane represented by the general formula (1) and having silanol groups at both molecular chain ends was measured at 25°C using a Canon-Fenske viscometer.

### [Example 1]

90.0 g (100 parts by mass) of organopolysiloxane (A-1-1) (in the general formula (1), R¹ represents a methyl group. Octamethylcyclotetrasiloxane content is 100 ppm or less, decamethylcyclopentasiloxane content is 100 ppm or less, and dodecamethylcyclohexasiloxane content is 100 ppm.) having a kinematic viscosity of 60 mm²/s and having silanol groups at both molecular chain ends as the component (A-1), 21.6 g (24 parts by mass) of polyoxyethylene lauryl ether (B-1) (EO=23 mol and HLB=16.9) as the component (B), 125.0 g (25 parts by mas as the component (C)) of an 18% aqueous solution (C-1) of sodium dodecylbenzenesulfonate as the component (C), and 53.2 g (59.1 parts by mass) of ion-exchanged water (D-1) were placed in a beaker having a capacity of 500 ml. The mixture was emulsified using a homogenizing mixer (Homogenizing Mixer Mark II Model 2.5, manufactured by PRIMIX Corporation) and further subjected to high pressure treatments twice at a treatment pressure of 100 MPa using a high pressure emulsification apparatus (Star Burst Mini HJP-25001, manufactured by Sugino Machine Limited), thereby to obtain a transparent first emulsion composition. The average particle diameter of the first emulsion composition was measured and found to be 70 nm.

The obtained first emulsion composition was placed in a plastic bottle having a capacity of 500 ml, and the bottle was allowed to stand overnight in a 15°C refrigerator to adjust the temperature to 15°C. Then, the emulsion composition was diluted with 6.5 g (7.2 parts by mass) of a 9.8% aqueous sulfuric acid solution as the component (E) and dispersed therein, and the bottle was allowed to stand for further 12 hours at 15°C to carry out emulsion-polymerization. Thereafter, the resultant liquid was diluted with 3.8 g (4.2 parts by mass) of a 20% aqueous sodium carbonate solution (F-1) and dispersed therein to neutralize the resultant liquid, thereby obtaining a transparent emulsion composition. The average particle diameter of the emulsion composition was measured and found to be e 70 nm. The results are shown in Table 3.

### [Example 2]

90.0 g (100 parts by mass) of organopolysiloxane (A-1-1) (in the general formula (1), R¹ represents a methyl group. Octamethylcyclotetrasiloxane content is 100 ppm or less, decamethylcyclopentasiloxane content is 100 ppm or less, and dodecamethylcyclohexasiloxane content is 100 ppm.) having a kinematic viscosity of 60 mm²/s and having silanol groups at both molecular chain ends as the component (A-1), 21.6 g (24 parts by mass) of polyoxyethylene lauryl ether (B-1) (EO=23 mol and HLB=16.9) as the component (B), 125.0 g (25 parts by mas as the component (C)) of an 18% aqueous solution (C-1) of sodium dodecylbenzenesulfonate as the component (C), and 45.5 g (50.6 parts by mass) of ion-exchanged water (D-1) were placed in a beaker having a capacity of 500 ml. The mixture was emulsified using a homogenizing mixer (Homogenizing Mixer Mark II Model 2.5, manufactured by PRIMIX Corporation) and further subjected to high pressure treatments twice at a treatment pressure of 100 MPa using a high pressure emulsification apparatus (Star Burst Mini HJP-25001, manufactured by Sugino Machine Limited), thereby to obtain a transparent first emulsion composition. The average particle diameter of the first emulsion composition was measured and found to be 70 nm.

The obtained first emulsion composition was placed in a plastic bottle having a capacity of 500 ml, and the bottle was allowed to stand overnight in a 15°C refrigerator to adjust the temperature to 15°C. Then, the emulsion composition was diluted with 11.3 g (12.6 parts by mass) of a 9.8% aqueous sulfuric acid solution as the component (E) and dispersed therein, and the bottle was allowed to stand for further 12 hours at 15°C to carry out emulsion-polymerization. Thereafter, the resultant liquid was diluted with 6.6 g (7.3 parts by mass) of a 20% aqueous sodium carbonate solution (F-1) and dispersed therein to neutralize the resultant liquid, thereby obtaining a transparent emulsion composition. The average particle diameter of the emulsion composition was measured and found to be 70 nm. The results are shown in Table 3.

### [Example 3]

90.0g (100 parts by mass) of organopolysiloxane (A-1-1) (in the general formula (1), R¹ represents a methyl group. Octamethylcyclotetrasiloxane content is 100 ppm or less, decamethylcyclopentasiloxane content is 100 ppm or less, and dodecamethylcyclohexasiloxane content is 100 ppm.) having a kinematic viscosity of 60 mm²/s and having silanol groups at both molecular chain ends as the component (A-1), 21.6 g (24 parts by mass) of polyoxyethylene lauryl ether (B-1) (EO=23 mol and HLB=16.9) as the component (B), 125.0 g (25 parts by mas as the component (C)) of an 18% aqueous solution (C-1) of sodium dodecylbenzenesulfonate as the component (C), and 53.2 g (59.1 parts by mass) of ion-exchanged water (D-1) were placed in a beaker having a capacity of 500 ml. The mixture was emulsified using a homogenizing mixer (Homogenizing Mixer Mark II Model 2.5, manufactured by PRIMIX Corporation) and further subjected to high pressure treatments twice at a treatment pressure of 100 MPa using a high pressure emulsification apparatus (Star Burst Mini HJP-25001, manufactured by Sugino Machine Limited), thereby to obtain a transparent first emulsion composition. The average particle diameter of the first emulsion composition was measured and found to be 70 nm.

The obtained first emulsion composition was placed in a plastic bottle having a capacity of 500 ml, and the bottle was allowed to stand overnight in a 15°C refrigerator to adjust the temperature to 15°C. Then, the emulsion composition was diluted with 6.5 g (7.2 parts by mass) of a 9.8% aqueous sulfuric acid solution as the component (E) and dispersed therein, and the bottle was allowed to stand for further 24 hours at 15°C to carry out emulsion-polymerization. Thereafter, the resultant liquid was diluted with 3.8 g (4.2 parts by mass) of a 20% aqueous sodium carbonate solution (F-1) and dispersed therein to neutralize the resultant liquid, thereby obtaining a transparent emulsion composition. The average particle diameter of the emulsion composition was measured and found to be 70 nm. The results are shown in Table 3.

### [Example 4]

90.0 g (100 parts by mass) of organopolysiloxane (A-1-1) (in the general formula (1), R¹ represents a methyl group. Octamethylcyclotetrasiloxane content is 100 ppm or less, decamethylcyclopentasiloxane content is 100 ppm or less, and dodecamethylcyclohexasiloxane content is 100 ppm.) having a kinematic viscosity of 60 mm²/s and having silanol groups at both molecular chain ends as the component (A-1), 21.6 g (24 parts by mass) of polyoxyethylene lauryl ether (B-1) (EO=23 mol and HLB=16.9) as the component (B), 125.0 g (25 parts by mas as the component (C)) of an 18% aqueous solution (C-1) of sodium dodecylbenzenesulfonate as the component (C), and 53.2 g (59.1 parts by mass) of ion-exchanged water (D-1) were placed in a beaker having a capacity of 500 ml. The mixture was emulsified using a homogenizing mixer (Homogenizing Mixer Mark II Model 2.5, manufactured by PRIMIX Corporation) and further subjected to high pressure treatments twice at a treatment pressure of 100 MPa using a high pressure emulsification apparatus (Star Burst Mini HJP-25001, manufactured by Sugino Machine Limited), thereby to obtain a transparent first emulsion composition. The average particle diameter of the first emulsion composition was measured and found to be 70 nm.

The obtained first emulsion composition was placed in a plastic bottle having a capacity of 500 ml, and the bottle was allowed to stand overnight in a 10°C refrigerator to adjust the temperature to 10°C. Then, the emulsion composition was diluted with 6.5 g (7.2 parts by mass) of a 9.8% aqueous sulfuric acid solution as the component (E) and dispersed therein, and the bottle was allowed to stand for further 24 hours at 10°C to carry out emulsion-polymerization. Thereafter, the resultant liquid was diluted with 3.8 g (4.2 parts by mass) of a 20% aqueous sodium carbonate solution (F-1) and dispersed therein to neutralize the resultant liquid, thereby obtaining a transparent emulsion composition. The average particle diameter of the emulsion composition was measured and found to be 70 nm. The results are shown in Table 3.

### [Example 5]

90.0 g (100 parts by mass) of organopolysiloxane (A-1-1) (in the general formula (1), R¹ represents a methyl group. Octamethylcyclotetrasiloxane content is 100 ppm or less, decamethylcyclopentasiloxane content is 100 ppm or less, and dodecamethylcyclohexasiloxane content is 100 ppm.) having a kinematic viscosity of 60 mm²/s and having silanol groups at both molecular chain ends as the component (A-1), 21.6 g (24 parts by mass) of polyoxyethylene polyoxypropylene decyl ether (B-2) (EO=30 mol, PO=2 mol, and HLB=15.0) as the component (B), 125.0 g (25 parts by mas as the component (C)) of an 18% aqueous solution (C-1) of sodium dodecylbenzenesulfonate as the component (C), and 30.5 g (33.9 parts by mass) of ion-exchanged water (D-1) were placed in a beaker having a capacity of 500 ml. The mixture was emulsified using a homogenizing mixer (Homogenizing Mixer Mark II Model 2.5, manufactured by PRIMIX Corporation) and further subjected to high pressure treatments twice at a treatment pressure of 100 MPa using a high pressure emulsification apparatus (Star Burst Mini HJP-25001, manufactured by Sugino Machine Limited), thereby to obtain a transparent first emulsion composition. The average particle diameter of the first emulsion composition was measured and found to be 70 nm.

The obtained first emulsion composition was placed in a plastic bottle having a capacity of 500 ml, and the bottle was allowed to stand overnight in a 10°C refrigerator to adjust the temperature to 10°C. Then, the emulsion composition was diluted with 6.5 g (7.2 parts by mass) of a 9.8% aqueous sulfuric acid solution as the component (E) and dispersed therein, and the bottle was allowed to stand for further 24 hours at 10°C to carry out emulsion-polymerization. Thereafter, the resultant liquid was diluted with 8.5 g (9.4 parts by mass) of a 25% triethanolamine aqueous solution (F-2) and dispersed therein to neutralize the resultant liquid. Subsequently, the resultant liquid was further added and diluted with 18 g (20 parts by mass) of ion-exchanged water (D-2) and dispersed therein, thereby obtaining a transparent emulsion composition. The average particle diameter of the emulsion composition was measured and found to be 70 nm. The results are shown in Table 3.

### [Example 6]

90.0 g (100 parts by mass) of organopolysiloxane (A-1-1) (in the general formula (1), R¹ represents a methyl group. Octamethylcyclotetrasiloxane content is 100 ppm or less, decamethylcyclopentasiloxane content is 100 ppm or less, and dodecamethylcyclohexasiloxane content is 100 ppm.) having a kinematic viscosity of 60 mm²/s and having silanol groups at both molecular chain ends as the component (A-1), 21.6 g (24 parts by mass) of polyoxyethylene polyoxypropylene decyl ether (B-2) (EO=30 mol, PO=2 mol, and HLB=15.0) as the component (B), 125.0 g (25 parts by mas as the component (C)) of an 18% aqueous solution (C-1) of sodium dodecylbenzenesulfonate as the component (C), and 30.5 g (33.9 parts by mass) of ion-exchanged water (D-1) were placed in a beaker having a capacity of 500 ml. The mixture was emulsified using a homogenizing mixer (Homogenizing Mixer Mark II Model 2.5, manufactured by PRIMIX Corporation) and further subjected to high pressure treatments twice at a treatment pressure of 100 MPa using a high pressure emulsification apparatus (Star Burst Mini HJP-25001, manufactured by Sugino Machine Limited), thereby to obtain a transparent first emulsion composition. The average particle diameter of the first emulsion composition was measured and found to be 70 nm.

The obtained first emulsion composition was placed in a plastic bottle having a capacity of 500 ml, and the bottle was allowed to stand overnight in a 10°C refrigerator to adjust the temperature to 10°C. Then, the emulsion composition was diluted with 6.5 g (7.2 parts by mass) of a 9.8% aqueous sulfuric acid solution as the component (E) and dispersed therein, and the bottle was allowed to stand for further 24 hours at 10°C to carry out emulsion-polymerization. Thereafter, the resultant liquid was diluted with 8.5 g (9.4 parts by mass) of a 25% triethanolamine aqueous solution (F-2) and dispersed therein to neutralize the resultant liquid. Subsequently, the resultant liquid was further added and diluted with 18 g (20 parts by mass) of sodium dodecylbenzenesulfonate (purity: 92% or more) (C-2) as the component (C) and dispersed therein, thereby obtaining a transparent emulsion composition. The average particle diameter of the emulsion composition was measured and found to be 70 nm. The results are shown in Table 3.

### [Example 7]

90.0 g (100 parts by mass) of organopolysiloxane (A-1-1) (in the general formula (1), R¹ represents a methyl group. Octamethylcyclotetrasiloxane content is 100 ppm or less, decamethylcyclopentasiloxane content is 100 ppm or less, and dodecamethylcyclohexasiloxane content is 100 ppm.) having a kinematic viscosity of 60 mm²/s and having silanol groups at both molecular chain ends as the component (A-1), 21.6 g (24 parts by mass) of polyoxyethylene polyoxypropylene decyl ether (B-2) (EO=30 mol, PO=2 mol, and HLB=15.0) as the component (B), 125.0 g (25 parts by mas as the component (C)) of an 18% aqueous solution (C-1) of sodium dodecylbenzenesulfonate as the component (C), and 30.5 g (33.9 parts by mass) of ion-exchanged water (D-1) were placed in a beaker having a capacity of 500 ml. The mixture was emulsified using a homogenizing mixer (Homogenizing Mixer Mark II Model 2.5, manufactured by PRIMIX Corporation) and further subjected to high pressure treatments twice at a treatment pressure of 100 MPa using a high pressure emulsification apparatus (Star Burst Mini HJP-25001, manufactured by Sugino Machine Limited), thereby to obtain a transparent first emulsion composition with transparency. The average particle diameter of the first emulsion composition was measured and found to be 70 nm.

The obtained first emulsion composition was placed in a plastic bottle having a capacity of 500 ml, and the bottle was allowed to stand overnight in a 10°C refrigerator to adjust the temperature to 10°C. Then, the emulsion composition was diluted with 6.5 g (7.2 parts by mass) of a 9.8% aqueous sulfuric acid solution as the component (E) and dispersed therein, and the bottle was allowed to stand for further 24 hours at 10°C to carry out emulsion-polymerization. Thereafter, the resultant liquid was diluted with 8.5 g (9.4 parts by mass) of a 25% triethanolamine aqueous solution (F-2) and dispersed therein to neutralize the resultant liquid, further added and diluted with 10.8 g (12 parts by mass) of ion-exchanged water (D-2) and 7.2 g (8 parts by mass)of glycerin, and dispersed therein, thereby obtaining a transparent emulsion composition. The average particle diameter of the emulsion composition was measured and found to be 70 nm. The results are shown in Table 3.

### [Comparative Example 1]

90.0 g (100 parts by mass) of organopolysiloxane (a-1) (in the general formula (1), R¹ represents a methyl group. Octamethylcyclotetrasiloxane content is 100 ppm or less, decamethylcyclopentasiloxane content is 100 ppm or less, and dodecamethylcyclohexasiloxane content is 100 ppm.) having a kinematic viscosity of 700 mm²/s and having silanol groups at both molecular chain ends, 21.6 g (24 parts by mass) of polyoxyethylene lauryl ether (B-1) (EO=23 mol and HLB=16.9) as the component (B), 125.0 g (25 parts by mas as the component (C)) of an 18% aqueous solution (C-1) of sodium dodecylbenzenesulfonate as the component (C), and 53.2 g (59.1 parts by mass) of ion-exchanged water (D-1) were placed in a beaker having a capacity of 500 ml. The mixture was emulsified using a homogenizing mixer (Homogenizing Mixer Mark II Model 2.5, manufactured by PRIMIX Corporation) and further subjected to high pressure treatments twice at a treatment pressure of 100 MPa using a high pressure emulsification apparatus (Star Burst Mini HJP-25001, manufactured by Sugino Machine Limited), thereby to obtain a cloudy first emulsion composition. The average particle diameter of the first emulsion composition was measured and found to be 210 nm. The results are shown in Table 3.

### [Comparative Example 2]

90.0 g (100 parts by mass) of organopolysiloxane (A-1-2) (in the general formula (1), R¹ represents a methyl group. Octamethylcyclotetrasiloxane content is 100 ppm or less, decamethylcyclopentasiloxane content is 100 ppm or less, and dodecamethylcyclohexasiloxane content is 100 ppm.) having a kinematic viscosity of 40 mm²/s and having silanol groups at both molecular chain ends as the component (A-1), 3.6 g (4 parts by mass) of polyoxyethylene lauryl ether (B-1) (EO=23 mol and HLB=16.9) as the component (B), 125.0 g (25 parts by mas as the component (C)) of an 18% aqueous solution (C-1) of sodium dodecylbenzenesulfonate as the component (C), and 71.2 g (79.1 parts by mass) of ion-exchanged water (D-1) were placed in a beaker having a capacity of 500 ml. The mixture was emulsified using a homogenizing mixer (Homogenizing Mixer Mark II Model 2.5, manufactured by PRIMIX Corporation) and further subjected to high pressure treatments twice at a treatment pressure of 100 MPa using a high pressure emulsification apparatus (Star Burst Mini HJP-25001, manufactured by Sugino Machine Limited), thereby to obtain a cloudy first emulsion composition. The average particle diameter of the first emulsion composition was measured and found to be 140 nm. The results are shown in Table 3.

### [Comparative Example 3]

90.0 g (100 parts by mass) of organopolysiloxane (A-1-1) (in the general formula (1), R¹ represents a methyl group. Octamethylcyclotetrasiloxane content is 100 ppm or less, decamethylcyclopentasiloxane content is 100 ppm or less, and dodecamethylcyclohexasiloxane content is 100 ppm.) having a kinematic viscosity of 60 mm²/s and having silanol groups at both molecular chain ends as the component (A-1), 48g(53.3 parts by mass) of polyoxyethylene lauryl ether (B-1) (EO=23 mol and HLB=16.9) as the component (B), 125.0 g (25 parts by mas as the component (C)) of an 18% aqueous solution (C-1) of sodium dodecylbenzenesulfonate as the component (C), and 26.8 g (29.8 parts by mass) of ion-exchanged water (D-1) were placed in a beaker having a capacity of 500 ml. The mixture was emulsified using a homogenizing mixer (Homogenizing Mixer Mark II Model 2.5, manufactured by PRIMIX Corporation) and further subjected to high pressure treatments once at a treatment pressure of 100 MPa using a high pressure emulsification apparatus (Star Burst Mini HJP-25001, manufactured by Sugino Machine Limited), thereby to obtain a cloudy first emulsion composition with high viscosity. The first emulsion composition has high viscosity so that the second high pressure treatment could not performed. The average particle diameter of the first emulsion composition was measured and found to be 140 nm. The results are shown in Table 3.

### [Comparative Example 4]

90.0 g (100 parts by mass) of organopolysiloxane (A-1-1) (in the general formula (1), R¹ represents a methyl group. Octamethylcyclotetrasiloxane content is 100 ppm or less, decamethylcyclopentasiloxane content is 100 ppm or less, and dodecamethylcyclohexasiloxane content is 100 ppm.) having a kinematic viscosity of 60 mm²/s and having silanol groups at both molecular chain ends as the component (A-1), 21.6 g (24 parts by mass) of polyoxyethylene polyoxypropylene decyl ether (b-1) (EO=7 mol, PO=2 mol, and HLB=10.0) as the component (B), 125.0 g (25 parts by mas as the component (C)) of an 18% aqueous solution (C-1) of sodium dodecylbenzenesulfonate as the component (C), and 53.2 g (59.1 parts by mass) of ion-exchanged water (D-1) were placed in a beaker having a capacity of 500 ml. The mixture was emulsified using a homogenizing mixer (Homogenizing Mixer Mark II Model 2.5, manufactured by PRIMIX Corporation) and further subjected to high pressure treatments twice at a treatment pressure of 100 MPa using a high pressure emulsification apparatus (Star Burst Mini HJP-25001, manufactured by Sugino Machine Limited), thereby to obtain a cloudy first emulsion composition. The average particle diameter of the first emulsion composition was measured and found to be 110 nm. The results are shown in Table 3.

### [Comparative Example 5]

90.0 g (100 parts by mass) of organopolysiloxane (A-1-1) (in the general formula (1), R¹ represents a methyl group. Octamethylcyclotetrasiloxane content is 100 ppm or less, decamethylcyclopentasiloxane content is 100 ppm or less, and dodecamethylcyclohexasiloxane content is 100 ppm.) having a kinematic viscosity of 60 mm²/s and having silanol groups at both molecular chain ends as the component (A-1), 21.6 g (24 parts by mass) of polyoxyethylene lauryl ether (B-1) (EO=23 mol and HLB=16.9) as the component (B), 140.0 g (46.7 parts by mas as the component (C)) of a 30% sodium dodecylbenzene-sulfonate aqueous solution (C-3) as the component (C), and 29.4 g(32.7 parts by mass) of ion-exchanged water (D-1) were placed in a beaker having a capacity of 500 ml. The mixture was emulsified using a homogenizing mixer (Homogenizing Mixer Mark II Model 2.5, manufactured by PRIMIX Corporation) and further subjected to high pressure treatments twice at a treatment pressure of 100 MPa using a high pressure emulsification apparatus (Star Burst Mini HJP-25001, manufactured by Sugino Machine Limited), thereby to obtain a transparent first emulsion composition. The average particle diameter of the first emulsion composition was measured and found to be 70 nm. When the obtained first emulsion composition was placed in a plastic bottle having a capacity of 500 ml and allowed to stand overnight in a 10°C refrigerator, it was cloudy. The average particle diameter of the first emulsion composition was measured again and found to be 160 nm. The results are shown in Table 3.

Average particle diameter, transparency of appearance, viscosity of organopolysiloxane, and the contained amounts of octamethylcyclotetrasiloxane, decamethylcyclopentasiloxane, and dodecamethylcyclohexasiloxane of the first emulsion composition and the target emulsion composition of the above Examples and Comparative Examples were evaluated. The results of the evaluation are shown in Table 3. The details of the evaluation method are described below.

### [Average Particle Diameter]

The Stokes diameter was measured by a dynamic light scattering method using a nanoparticle diameter measuring apparatus (DelsaMax CORE) manufactured by Beckman Coulter, Inc.

### [Transparency of Appearance]

100 g of the emulsion composition was placed in a 100 mL glass bottle, and the appearance was observed. A piece of paper with writing written on it was placed behind the glass bottle, and when the writing was easily readable, it was marked with "Good", and when the writing was difficult to read or could not be read, it was marked with "Poor".

### [Light Transmittance]

The emulsion composition was filled into a quartz glass cell with an optical path length of 1 cm, and the light transmittance at a wavelength of 500 nm was measured using a spectrophotometer (U-3310) manufactured by Hitachi High-Tech Science Corporation.

### [Viscosity of Organopolysiloxane]

300g of the emulsion composition was mixed with 300g of isopropyl alcohol, and the precipitated organopolysiloxane was separated and heated at 105°C to remove the isopropyl alcohol, and then the viscosity of the organopolysiloxane was measured. The value was measured at 25°C using a TVB-10 viscometer manufactured by Toki Sangyo Co., Ltd. [Contained amounts of Octamethylcyclotetrasiloxane, Decamethylcyclopentasiloxane, and Dodecamethylcyclohexasiloxane]

0.1 g of the emulsion composition and 10 mL of acetone or hexane containing 20 ppm (mass) of tetradecane as an internal standard were placed in a 25 mL glass bottle and shaken for 2 hours to extract octamethylcyclotetrasiloxane, decamethylcyclopentasiloxane, and dodecamethylcyclohexasiloxane contained in the emulsion composition. Only the supernatant (acetone layer or hexane layer) after centrifugation was collected and analyzed by gas chromatography to quantify the contained amounts of octamethylcyclotetrasiloxane, decamethylcyclopentasiloxane, and dodecamethylcyclohexasiloxane.

For the measurements, a gas chromatograph (Agilent 7890B GC system) manufactured by Agilent Technologies, Inc. and a capillary column DB-5ms (column specifications: inner diameter 0.53 mm, length 30 m, film thickness 1 um) manufactured by the same company were used. In addition, acetone containing 20 ppm of tetradecane was used in Examples 1 to 4, and hexane containing 200 ppm of tetradecane was used in Examples 5 and 6.

**[Table 1]**

| | | Example 1 | Example 2 | Example 3 | Example 4 | Example 5 | Example 6 | Example 7 |
|---|---|---|---|---|---|---|---|---|
| Organopolysiloxane with silanol groups | (A-1-1) | 100.0 | 100.0 | 100.0 | 100.0 | 100.0 | 100.0 | 100.0 |
| | Kinematic viscosity 60 mm²/s | | | | | | | |
| Nonionic surfactant | (B-1) | 24.0 | 24.0 | 24.0 | 24.0 | | | |
| | Pdyoxyethyiene lauryl ether (HLB=16.9) | | | | | | | |
| | (B-2) | | | | | 24.0 | 24.0 | 24.0 |
| | Pdyoxyethyiene polyoxypropylene decyl ether (HLB=15.0) | | | | | | | |
| Anionic surfactant | (C-1) | 138.9 (25.0) | 138.9 (25.0) | 138.9 (25.0) | 138.9 (25.0) | 138.9 (25.0) | 138.9 (25.0) | 138.9 (25.0) |
| | 18% sodium dodecylbenzenesulfonate aqueous solution | | | | | | | |
| | (C-2) | | | | | | 20.0 (18.4≤) | |
| | Sodium dodecylbenzenesulfonate (purity: 92% or more) | | | | | | | |
| Ion-exchanged water | (D-1) | 59.1 | 50.6 | 59.1 | 59.1 | 33.9 | 33.9 | 33.9 |
| | (D-2) | | | | | 20.0 | | 12.0 |
| Acid catalyst | (E) | 7.2 | 12.6 | 7.2 | 7.2 | 7.2 | 7.2 | 7.2 |
| | 9.8% sulfuric acid aqueous sdution | | | | | | | |
| Neutralizing agent | (F-1) | 4.2 | 7.3 | 4.2 | 4.2 | | | |
| | 20% sodium carbonate aqueous solution | | | | | | | |
| | (F-2) | | | | | 9.4 | 9.4 | 9.4 |
| | 25% triethandamine aqueous solution | | | | | | | |
| Additive | Glycerin | | | | | | | 8.0 |
| Polymerization temperature | | 15°C | 15°C | 15°C | 10°C | 10°C | 10°C | 10°C |
| Polymerization time | | 12h | 12h | 24h | 24h | 24h | 24h | 24h |

Numbers in parentheses ( ) are numbers in parts by mass of active components.

**[Table 2]**

| | | Comparative Example 1 | Comparative Example 2 | Comparative Example 3 | Comparative Example 4 | Comparative Example 5 |
|---|---|---|---|---|---|---|
| Organopolysiloxane with silanol groups | (A-1-1) | | | 100.0 | 100.0 | 100.0 |
| | Kinematic viscosity 60 mm²/s | | | | | |
| | (A-1-2) | | 100.0 | | | |
| | Kinematic viscosity 40 mm²/s | | | | | |
| | (a-1) | 100.0 | | | | |
| | Kinematic viscosity 700 mm²/s | | | | | |
| Nonionic surfactant | (B-1) | 24.0 | 4.0 | 53.3 | | 24.0 |
| | Polyoxyethylene lauryl ether (HLB=16.9) | | | | | |

| | | | | | | |
|---|---|---|---|---|---|---|
| | (b-1) | | | | | |
| | Polyoxyethylene polyoxypropylene decyl ether (HLB=10.0) | | | | 24.0 | |
| Anionic surfactant | (C-1) | 138.9 (25.0) | 138.9 (25.0) | 138.9 (25.0) | 138.9 (25.0) | |
| | 18% sodium dodecylbenzenesulfonate aqueous solution | | | | | |
| | (C-3) | | | | | 155.6 (46.7) |
| | 30% sodium dodecylbenzenesulfonate aqueous solution | | | | | |
| Ion-exchanged water | (D-1) | 59.1 | 79.1 | 29.8 | 59.1 | 32.7 |
| Polymerization temperature | | - | - | - | - | - |
| Polymerization time | | - | - | - | - | - |

Numbers in parentheses ( ) are numbers in parts by mass of active components.

**[Table 3]**

| | | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 |
|---|---|---|---|---|---|---|---|---|---|---|---|---|---|
| Average particle diameter nm | First emulsion | 70 | 70 | 70 | 60 | 60 | 60 | 60 | 210 | 140 | 140 | 110 | 70-160 |
| | Target emulsion | 70 | 70 | 70 | 70 | 70 | 60 | 60 | - | - | - | - | - |
| Transparency | First emulsion | Good | Good | Good | Good | Good | Good | Good | Poor | Poor | Poor | Poor | Good Poor |
| | Target emulsion | Good | Good | Good | Good | Good | Good | Good | - | - | - | - | - |
| Light transmittance % | | 53 | 52 | 50 | 49 | 63 | 88 | 79 | - | - | - | - | - |
| Viscosity of organopolysiloxane mPa·s | | 50,100 | 151,500 | 169,000 | 214,000 | 221,000 | 221,000 | 221,000 | - | - | - | - | - |
| D₄ content ppm | | 5,560 | 9,050 | 7,750 | 5,070 | 6,670 | 6,670 | 6,670 | - | - | - | - | - |
| D₅ content ppm | | 4,000 | 5,220 | 4,530 | 1,720 | 2,480 | 2,480 | 2,480 | - | - | - | - | - |
| D₆ content ppm | | 1,410 | 5,430 | 4,680 | 2,100 | 2,470 | 2,470 | 2,470 | - | - | - | - | - |

| | | | | | | | | | | | | | |
|---|---|---|---|---|---|---|---|---|---|---|---|---|---|
| D₄: octamethylcyclotetrasiloxane, D₅: decamethylcyclopentasiloxane, and D₆: dodecamethylcyclohexasiloxane | | | | | | | | | | | | | |

In Examples 1 to 7, according to the respective components defined in the present invention, transparent emulsion compositions were obtained in which the average particle diameter of the first emulsion and the target emulsion was 100 nm or less, the viscosity of the organopolysiloxane in the emulsion composition was 30,000 mPa·s or more, and the contained amounts of octamethylcyclotetrasiloxane, decamethylcyclopentasiloxane, and dodecamethylcyclohexasiloxane were each 10,000 ppm or less. In Comparative Example 1, the dynamic viscosity of the (a-1) component was 700 mm²/s, in Comparative Example 2, the component (B) was contained in an amount of 4.0 parts by mass, in Comparative Example 3, the component (B) was contained in an amount of 53.3 parts by mass, and in Comparative Example 4, the HLB of the component (B) was 10.0. In all of these cases, the particle diameter of the first emulsion was not 100 nm or less and there was no transparency. On the other hand, in Comparative Example 5, the component (C) was contained in an amounts of 46.7 parts by mass, and the average particle diameter of the first emulsion was initially 100 nm or less and transparent, but after leaving it overnight in a 10°C refrigerator, it became 160 nm, and it was found that when preparing the first emulsion, the blending amount of (C) needs to be 45 parts by mass or less.

The present description includes the following embodiments.
[1]: An organopolysiloxane emulsion composition having an average particle diameter of 100 nm or less and comprising:
   (A) 100 parts by mass of organopolysiloxane having a viscosity at 25°C of 30,000 mPa·s or more, containing octamethylcyclotetrasiloxane, decamethylcyclopentasiloxane, and dodecamethylcyclohexasiloxane, each in an amount of 10,000 ppm or less, and being a condensation reaction product of organopolysiloxane represented by the following general formula (1) and having silanol groups at both molecular chain ends,

      HO(R¹₂SiO)ₙH (1)

      wherein R¹ independently represents a hydrogen atom or a substituted or unsubstituted monovalent hydrocarbon group having 1 to 20 carbon atoms, and "n" represents a number that makes a kinematic viscosity at 25°C of the organopolysiloxane 10 mm²/s or more and less than 200 mm²/s;
   (B) 10 to 50 parts by mass of a nonionic surfactant having an HLB of 12 to 18;
   (C) 10 to 60 parts by mass of an anionic surfactant; and
   (D) 20 to 1,000 parts by mass of water.
[2]: The organopolysiloxane emulsion composition of the above [1], wherein the organopolysiloxane (A) has a viscosity at 25°C of 90,000 mPa·s or more.
[3]: The organopolysiloxane emulsion composition of the above [1] or [2], wherein the nonionic surfactant (B) comprises one or two or more kinds of nonionic surfactants selected from polyoxyalkylene alkyl ether, polyoxyalkylene sorbitan fatty acid ester, polyoxyalkylene fatty acid ester, and polyglycerin fatty acid ester, each of which has an HLB of 14 to 18.
[4]: The organopolysiloxane emulsion composition of any one of the above [1] to [3], wherein the organopolysiloxane emulsion composition has a light transmittance of 40% or more.
[5]: The organopolysiloxane emulsion composition of any one of the above [1] to [4], wherein 100 parts by mass of the organopolysiloxane emulsion composition contains 15 to 45 parts by mass of the organopolysiloxane (A).
[6]: A method for manufacturing an organopolysiloxane emulsion composition comprising the steps of:
   (I) emulsifying a mixture of
      (A-1) 100 parts by mass of organopolysiloxane represented by the following general formula (1), containing each of octamethylcyclotetrasiloxane, decamethylcyclopentasiloxane, and dodecamethylcyclohexasiloxane in an amount of 2,000 ppm or less, and having silanol groups at both molecular chain ends,

         HO(R¹₂SiO)ₙH (1)

         wherein R¹ independently represents a hydrogen atom or a substituted or unsubstituted monovalent hydrocarbon group having 1 to 20 carbon atoms, and "n" represents a number that makes a kinematic viscosity at 25°C of the organopolysiloxane 10 mm²/s or more and less than 200 mm²/s,
      (B) 10 to 50 parts by mass of a nonionic surfactant having an HLB of 12 to 18,
      (C) 10 to 45 parts by mass of an anionic surfactant, and
      (D) 20 to 1,000 parts by mass of water, with an emulsifying apparatus that reduces a diameter of the emulsion particle due to shearing force or pressure, and preparing the emulsion composition to have the average particle diameter of 100 nm or less; and
   (II) emulsion-polymerizing the obtained emulsion composition at a temperature of 40°C or lower in the presence of a acid catalyst (E), the addition of the acid catalyst optionally being omitted when the anionic surfactant (C) has a catalytic action, stopping the reaction by adding a neutralizing agent (F), and preparing the emulsion composition in which an organopolysiloxane (A), being a condensation reaction product of the formed component (A-1), has a viscosity at 25°C of 30,000 mPa·s or more, octamethylcyclotetrasiloxane, decamethylcyclopentasiloxane, and dodecamethylcyclohexasiloxane are each contained in amount of 10,000 ppm or less in the organopolysiloxane, and the average particle diameter of the emulsion composition is 100 nm or less.
[7]: The method for manufacturing an organopolysiloxane emulsion composition of the above [6], wherein the organopolysiloxane (A) in the organopolysiloxane emulsion composition has a viscosity at 25°C of 90,000 mPa·s or more.
[8]: The method for manufacturing an organopolysiloxane emulsion composition of the above [6] or [7], wherein a nonionic surfactant comprising one or two or more kinds of nonionic surfactants selected from polyoxyalkylene alkyl ether, polyoxyalkylene sorbitan fatty acid ester, polyoxyalkylene fatty acid ester, and polyglycerin fatty acid ester, each having an HLB of 14 to 18, is used as the nonionic surfactant (B).
[9]: The method for manufacturing an organopolysiloxane emulsion composition of any one of the above [6] to [8], comprising a step (III) of blending 0 to 50 parts by mass of the anionic surfactant (C) and making the total blending amount thereof 10 to 60 parts by mass based on 100 parts by mass of the organopolysiloxane (A) after the step (II).
[10]: The method for manufacturing an organopolysiloxane emulsion composition of any one of the above [6] to [9], wherein the polymerizing is performed at 25°C or lower in the step (II).
[11]: The method for manufacturing an organopolysiloxane emulsion composition of any one of the above [6] to [10], wherein polymerization time in the polymerizing is 48 hours or less in the step (II).
[12]: The method for manufacturing an organopolysiloxane emulsion composition of any one of the above [6] to [11], wherein the organopolysiloxane emulsion composition has a light transmittance of 40% or more.
[13]: The method for manufacturing an organopolysiloxane emulsion composition of any one of the above [6] to [12], wherein the organopolysiloxane emulsion composition containing 15 to 45 parts by mass of the organopolysiloxane (A) based on 100 parts by mass of the organopolysiloxane emulsion composition is manufactured.
[14]: The method for manufacturing an organopolysiloxane emulsion composition of any one of the above [6] to [13], wherein the emulsifying apparatus reducing the diameter of the emulsion particle in the step (I) is a high-pressure homogenizer.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. An organopolysiloxane emulsion composition having an average particle diameter of 100 nm or less and comprising:
(A) 100 parts by mass of organopolysiloxane having a viscosity at 25°C of 30,000 mPa·s or more, containing octamethylcyclotetrasiloxane, decamethylcyclopentasiloxane, and dodecamethylcyclohexasiloxane, each in an amount of 10,000 ppm or less, and being a condensation reaction product of organopolysiloxane represented by the following general formula (1) and having silanol groups at both molecular chain ends,
HO(R¹₂SiO)ₙH (1)
wherein R¹ independently represents a hydrogen atom or a substituted or unsubstituted monovalent hydrocarbon group having 1 to 20 carbon atoms, and "n" represents a number that makes a kinematic viscosity at 25°C of the organopolysiloxane 10 mm²/s or more and less than 200 mm²/s;
(B) 10 to 50 parts by mass of a nonionic surfactant having an HLB of 12 to 18;
(C) 10 to 60 parts by mass of an anionic surfactant; and
(D) 20 to 1,000 parts by mass of water.

2. The organopolysiloxane emulsion composition according to claim 1, wherein the organopolysiloxane (A) has a viscosity at 25°C of 90,000 mPa·s or more.

3. The organopolysiloxane emulsion composition according to claim 1, wherein the nonionic surfactant (B) comprises one or two or more kinds of nonionic surfactants selected from polyoxyalkylene alkyl ether, polyoxyalkylene sorbitan fatty acid ester, polyoxyalkylene fatty acid ester, and polyglycerin fatty acid ester, each of which has an HLB of 14 to 18.

4. The organopolysiloxane emulsion composition according to claim 1, wherein the organopolysiloxane emulsion composition has a light transmittance of 40% or more.

5. The organopolysiloxane emulsion composition according to claim 1, wherein 100 parts by mass of the organopolysiloxane emulsion composition contains 15 to 45 parts by mass of the organopolysiloxane (A).

6. A method for manufacturing an organopolysiloxane emulsion composition comprising the steps of:
(I) emulsifying a mixture of
(A-1) 100 parts by mass of organopolysiloxane represented by the following general formula (1), containing each of octamethylcyclotetrasiloxane, decamethylcyclopentasiloxane, and dodecamethylcyclohexasiloxane in an amount of 2,000 ppm or less, and having silanol groups at both molecular chain ends,
HO(R¹₂SiO)ₙH (1)
wherein R¹ independently represents a hydrogen atom or a substituted or unsubstituted monovalent hydrocarbon group having 1 to 20 carbon atoms, and "n" represents a number that makes a kinematic viscosity at 25°C of the organopolysiloxane 10 mm²/s or more and less than 200 mm²/s,
(B) 10 to 50 parts by mass of a nonionic surfactant having an HLB of 12 to 18,
(C) 10 to 45 parts by mass of an anionic surfactant, and
(D) 20 to 1,000 parts by mass of water, with an emulsifying apparatus that reduces a diameter of the emulsion particle due to shearing force or pressure, and preparing the emulsion composition to have the average particle diameter of 100 nm or less; and
(II) emulsion-polymerizing the obtained emulsion composition at a temperature of 40°C or lower in the presence of a acid catalyst (E), the addition of the acid catalyst optionally being omitted when the anionic surfactant (C) has a catalytic action, stopping the reaction by adding a neutralizing agent (F), and preparing the emulsion composition in which an organopolysiloxane (A), being a condensation reaction product of the formed component (A-1), has a viscosity at 25°C of 30,000 mPa·s or more, octamethylcyclotetrasiloxane, decamethylcyclopentasiloxane, and dodecamethylcyclohexasiloxane are each contained in amount of 10,000 ppm or less in the organopolysiloxane, and the average particle diameter of the emulsion composition is 100 nm or less.

7. The method for manufacturing an organopolysiloxane emulsion composition according to claim 6, wherein the organopolysiloxane (A) in the organopolysiloxane emulsion composition has a viscosity at 25°C of 90,000 mPa·s or more.

8. The method for manufacturing an organopolysiloxane emulsion composition according to claim 6, wherein a nonionic surfactant comprising one or two or more kinds of nonionic surfactants selected from polyoxyalkylene alkyl ether, polyoxyalkylene sorbitan fatty acid ester, polyoxyalkylene fatty acid ester, and polyglycerin fatty acid ester, each having an HLB of 14 to 18, is used as the nonionic surfactant (B).

9. The method for manufacturing an organopolysiloxane emulsion composition according to claim 6, comprising a step (III) of blending 0 to 50 parts by mass of the anionic surfactant (C) and making the total blending amount thereof 10 to 60 parts by mass based on 100 parts by mass of the organopolysiloxane (A) after the step (II).

10. The method for manufacturing an organopolysiloxane emulsion composition according to claim 6, wherein the polymerizing is performed at 25°C or lower in the step (II).

11. The method for manufacturing an organopolysiloxane emulsion composition according to claim 6, wherein polymerization time in the polymerizing is 48 hours or less in the step (II).

12. The method for manufacturing an organopolysiloxane emulsion composition according to claim 6, wherein the organopolysiloxane emulsion composition has a light transmittance of 40% or more.

13. The method for manufacturing an organopolysiloxane emulsion composition according to claim 6, wherein the organopolysiloxane emulsion composition containing 15 to 45 parts by mass of the organopolysiloxane (A) based on 100 parts by mass of the organopolysiloxane emulsion composition is manufactured.

14. The method for manufacturing an organopolysiloxane emulsion composition according to claim 6, wherein the emulsifying apparatus reducing the diameter of the emulsion particle in the step (I) is a high-pressure homogenizer.
